# EUROPÄISCHE PATENTANMELDUNG

(11) **EP 1 584 750 A2**
(43) Veröffentlichungstag der Anmeldung: **12.10.2005**
(21) Anmeldenummer: 05007228.9
(22) Anmeldetag: 02.04.2005
(51) Int. Cl.: E01F 15/04

(54) **Abdeckplatte**

(30) Priorität: 09.04.2004 AT 6292004
(71) Anmelder: Compag Rohstoffaufbereitung GMBH, 3500 Krems (AT)
(72) Erfinder: Ettenauer, Hubert, 3552 Lengenfeld (AT)
(74) Vertreter: Krause, Peter

(57) **Zusammenfassung**

Die Erfindung betrifft eine Abdeckplatte (1) zur Verhinderung von Pflanzenwuchs im Bereich rund um eine stangenähnliche Verkehrshilfseinrichtung, wie Leitpfosten, Pfahl, Mast, Straßenlaterne und/oder Haltestange von Verkehrszeichen. Die Abdeckplatte (1) ist vorzugsweise rund ausgebildet. Mittig weist sie eine Ausnehmung (2) für die Verkehrshilfseinrichtung auf. In der Abdeckplatte (1) ist mindestens eine sich von der Ausnehmung (2) zum Rand erstreckende Soll-Bruchstelle (3) vorgesehen. Die Abdeckplatte (1) besteht aus an sich bekanntem recyceltem Kunststoff, wobei das Ausgangsgranulat eine Mischung aus Polyvinylchlorid und Polyethylen ist.

## Beschreibung

Die Erfindung betrifft eine Abdeckplatte zur Verhinderung von Pflanzenwuchs im Bereich rund um eine stangenähnliche Verkehrshilfseinrichtung, wie Leitpfosten, Pfahl, Mast, Straßenlaterne und/oder Haltestange von Verkehrszeichen, die vorzugsweise rund ausgebildet ist und mittig eine Ausnehmung für die Verkehrshilfseinrichtung aufweist.

Derartige Einrichtungen sind bekannt. So ist aus der DE 1 746 272 U eine Abdeckplatte für Pflanzen-, Sträucher- und Baumsetzlinge bekannt, die als Schutz für Pflanzensetzlinge gegen Überwucherung dient.

Weiters ist aus der DE 91 14 324.1 U1 eine Vorrichtung zur Verhinderung des Pflanzenwuchses im Bereich von Pfählen bekannt. Diese Platte ist aus einem verrottungsfesten Werkstoff hergestellt und mit einem dem Pfahlquerschnitt entsprechenden Ausschnitt versehen.

Auch in der DE 91 14 537.6 U1 ist eine Abdeckplatte beschrieben, die aus mehreren, sich überlappenden Teilen besteht. Hergestellt wird diese Platte aus recyceltem Kunststoff. Die Aussparung innen entspricht dem Pfosten.

Aus der DE 43 23 052 A1 ist eine Vorrichtung zur Abdeckung des Bodens, insbesondere in der Umgebung von in grasbewachsenem Gelände angeordneten Einrichtungen, wie Verkehrsleitpfosten und Leitplanken, bekannt, die aus mindestens einem plattenförmigen Element gebildet ist. Bei einer einteiligen Ausführung muss die Platte entweder über den Pfosten gestülpt werden oder sie wird zum Nachrüsten mehrteilig ausgebildet.

Schlussendlich ist noch eine Abdeckplatte aus der DE 201 04 447 U1 bekannt, die aus einem gegen Schneiden oder Ketten von Mähvorrichtungen stabilen Material besteht.

Wie also aufgezeigt sind viele Varianten einer Abdeckung zur Verhinderung des Pflanzenwuchses in der Umgebung von Pfosten, wie insbesondere Leitpfosten, bereits bekannt. Alle diese Abdeckungen haben aber den generellen Nachteil, dass sie für die Herstellung eine komplizierte konstruktive Ausbildung aufweisen, die einem durchschlagenden wirtschaftlichen Erfolg entgegensteht.

Aufgabe der Erfindung ist es daher eine Abdeckplatte der eingangs zitierten Art zu schaffen, die einerseits die oben aufgezeigten Nachteile vermeidet und die anderseits vor allem den Pflanzenwuchs in der unmittelbaren Umgebung von den stangenähnlichen Verkehrshilfseinrichtungen verhindert, so dass ein Nachmähen vermieden wird.

Die Aufgabe wird durch die Erfindung gelöst.

Die erfindungsgemäße Abdeckplatte ist dadurch gekennzeichnet, dass in der Abdeckplatte mindestens eine sich von der Ausnehmung zum Rand erstreckende Soll-Bruchstelle vorgesehen ist. Mit der Erfindung ist es erstmals möglich, eine einfache und rationelle Montage - gegebenenfalls ohne Hilfswerkzeuge - zu gewährleisten. Diese Soll-Bruchstelle hat den Vorteil, dass bei einer Neumontage von Stangen od. dgl. die Abdeckplatte nur übergestülpt werden muss und so eine flächendeckende Abdeckung gegeben ist. Darüber hinaus wird ein Verbiegen bzw. Verformen der Abdeckplatte aus der Plattenebene sicher vermieden, da ja die Abdeckplatte als homogenes Gebilde vorliegt. Im Zuge einer Nachrüstung kann die Soll-Bruchstelle genützt werden. Beispielsweise wird beim Nachrüsten eines auf einer Stange befestigten Verkehrszeichens die Soll-Bruchstelle händisch aufgebrochen, die Abdeckplatte in z-Richtung verbogen und um die Stange platziert.

Nach einem weiteren Merkmal der Erfindung ist die Soll-Bruchstelle als Nut mit vorzugsweise dreieckförmigem Querschnitt in der Abdeckplatte ausgebildet. Bei der Herstellung der Abdeckplatte kann diese Querschnittsform in einfachster Weise mitgeformt werden. Ein messerähnliches Werkzeug mit einem entsprechenden Querschnitt stellt diese Nut her.

Gemäß einer besonderen Ausgestaltung der Erfindung ist die Soll-Bruchstelle nur bis knapp an den Randbereich vorgesehen. Durch diese Beibehaltung des Plattenquerschnittes am Randbereich wird bei einer Neumontage vermieden, dass ein späteres Aufbrechen der Soll-Bruchstelle beispielsweise beim Überfahren - sei es absichtlich oder unabsichtlich - verhindert wird.

Nach einer Weiterbildung der Erfindung ist die Bruchstelle der Soll-Bruchstelle nach der Montage über Verbindungsmittel, beispielsweise Laschen, überbrückt. Auch mit dieser Maßnahme kann ein Aufbiegen der Abdeckplatte, bei einer Montage bei der die Soll-Bruchstelle genützt wird, verhindert werden. Die Markierungen in der Abdeckplatte für die Befestigungsmittel der Lasche können ebenfalls im Zuge der Herstellung erfolgen. Beispielsweise können die Befestigungen für das messerähnliche Werkzeug in der Herstellmaschine dafür Verwendung finden.

Gemäß einem weiteren besonderen Merkmal der Erfindung ist mindestens eine Soll-Knickstelle vorgesehen, die entsprechend einer Sehne, insbesondere Kreissehne, angeordnet ist. Wie allseits bekannt, ist der Straßenrand oft mit einer anschließenden Böschung versehen. Um sich in einfachster Weise an diese topographischen Unebenheiten anpassen zu können, wird die Knickstelle bereits bei der Herstellung vorgesehen.

Nach einer Ausgestaltung der Erfindung ist die Soll-Knickstelle als Nut ausgebildet. Auch diese Nut wird im Zuge der Herstellung der Abdeckplatte bereits mitgefertigt.

Gemäß einer Weiterbildung der Erfindung ist eine weitere Ausnehmung, zur Aufnahme beispielsweise einer Schneestange, außermittig und im Abstand zur mittigen Ausnehmung vorgesehen. Diese Weiterbildung wird ebenfalls im Herstellverfahren bereits berücksichtigt und trägt zu einer rationellen Wartung - nämlich dem Setzen der Schneestangen - des Straßenrandes bei.

Nach einer besonderen Ausgestaltung der Erfindung weist die Abdeckplatte eine Plattenstärke von 0,5 bis 3 cm, insbesondere 0,8 bis 1,5 cm, ein Gewicht von 2 bis 5 kg, insbesondere von 3 bis 4 kg, und einen Außendurchmesser von 35 bis 80 cm, insbesondere von 45 bis 55 cm, auf. Dadurch ist gewährleistet, dass die Abdeckplatte sicher am Boden aufliegt. Es sind keine weiteren Befestigungen, die die Abdeckplatte am Boden halten, vorzusehen.

Gemäß einem besonderen Merkmal der Erfindung besteht die Abdeckplatte aus an sich bekanntem recyceltem Kunststoff, wobei das Ausgangsgranulat eine Mischung aus Polyvinylchlorid und Polyethylen ist. Wie ja an sich bekannt, sind Alt-Kunststoffe sehr schwer zu entsorgen. Werden nun derartige Alt-Kunststoffe für neue, intelligente Produkte genützt, trägt dies nicht nur zur Einsparung von Rohstoffen bei, sondern erhöht auch die Wirtschaftlichkeit allgemein.

Nach einer besonderen Weiterbildung der Erfindung besteht die Mischung aus 75 Vol. % bis 98 Vol. % Polyvinylchlorid und 25 Vol. % bis 2 Vol. % Polyethylen, insbesondere 80 Vol. % bis 90 Vol. % Polyvinylchlorid und 20 Vol. % bis 10 Vol. % Polyethylen. Dadurch kann das äußerst schwer entsorgbare Polyethylen - das sich im Sonnenlicht auflöst - auf einfachste Weise wiederverwertet und entsorgt werden.

Gemäß einem weiteren besonderen Merkmal der Erfindung erfolgt die Gewinnung der Ausgangsmaterialien, wie Polyvinylchlorid und/oder Polyethylen, aus vorzugsweise industriellen Abfallprodukten, wie beispielsweise Alt-Kabeln. Wie bereits erwähnt und aufgezeigt, ist eine hohe Wirtschaftlichkeit mit dieser Rekrutierung der Ausgangsmaterialien gewährleistet. Die bei einer eventuellen Entsorgung derartiger Materialien anfallenden umweltschädlichen Produkte werden auf einfachste Weise vermieden.

Nach einem ganz besonderen Merkmal der Erfindung ist die Abdeckplatte im Zuge eines Extrudier-Verfahrens hergestellt. Dieses einfache und rationelle Verfahren zur Herstellung einer derartigen Abdeckplatte weist eine hohe Wirtschaftlichkeit auf, da die definitive Herstellung in einem Arbeitsschritt erfolgt. Ferner garantiert dieses Herstellverfahren eine Schonung der Umwelt.

Die Erfindung wird an Hand eines in den Zeichnungen dargestellten Ausführungsbeispieles näher erläutert.

Es zeigen:
Fig. 1 eine Seitenansicht gemäß dem Schnitt A-A in Fig. 2 und
Fig. 2 eine Ansicht der dem Boden zugewandten Seite der Abdeckplatte.

Einführend sei festgehalten, dass in der beschriebenen Ausführungsform gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können.

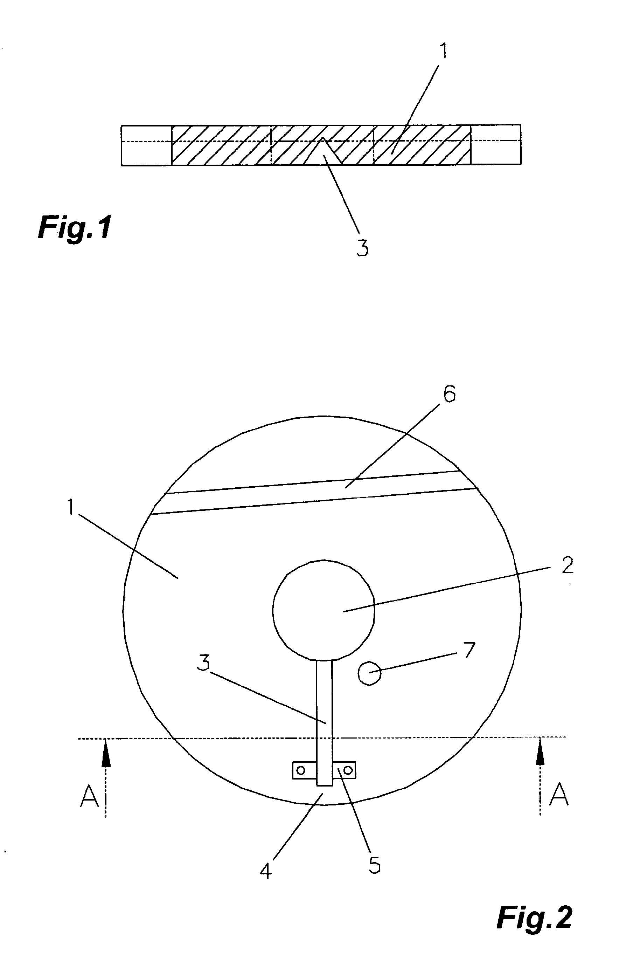

Gemäß der Fig. 1 und 2 weist die Abdeckplatte 1 eine Plattenstärke von 0,5 bis 3 cm, insbesondere 0,8 bis 1,5 cm, ein Gewicht von 2 bis 5 kg, insbesondere von 3 bis 4 kg, und einen Außendurchmesser von 35 bis 80 cm, insbesondere von 45 bis 55 cm, auf. In der Praxis werden sich eine Plattenstärke von 1 cm, ein Gewicht von ca. 3,5 kg und ein Außendurchmesser von ca. 50 cm bewähren. Damit ist vor allem gewährleistet, dass die Abdeckplatte 1 sicher am Boden aufliegt und durch Witterungseinflüsse, wie Wind, nicht abgehoben oder gar entfernt werden kann.

Diese Abdeckplatte 1 ist zur Verhinderung von Pflanzenwuchs im Bereich rund um eine stangenähnliche Verkehrshilfseinrichtung, wie Leitpfosten, Pfahl, Mast, Straßenlaterne und/oder Haltestange von Verkehrszeichen, am Straßenrand vorgesehen. Sie ist vorzugsweise rund ausgebildet und weist mittig eine Ausnehmung 2 für die Verkehrshilfseinrichtung auf.

Um nun diese Abdeckplatte 1 in der Praxis einsetzen zu können, bieten sich zwei Möglichkeiten an. Einerseits kann die Abdeckplatte im Zuge von Neusetzungen bzw. Neumontagen Anwendung finden. Dann wird die Abdeckplatte 1 vor dem Setzen der Stange oder vor der Montage des Verkehrszeichens mit der Ausnehmung 2 über die Stange geschoben. Eine einfachere Möglichkeit gibt es nicht.

Anderseits kann mit der Abdeckplatte 1 auch eine Nachrüstung der stangenähnlichen Verkehrshilfseinrichtung durchgeführt werden. Zu diesem Zweck weist die Abdeckplatte 1 eine sich von der Ausnehmung zum Rand erstreckende Soll-Bruchstelle 3 auf. Die Soll-Bruchstelle 3 ist als Nut mit vorzugsweise dreieckförmigem Querschnitt in der Abdeckplatte 1 ausgebildet. Diese Soll-Bruchstelle 3 vermindert die Dicke der Abdeckplatte 1 und kann - gegebenenfalls ohne Werkzeug - händisch aufgebrochen werden. Durch einfache Verformung kann die Abdeckplatte 1 um die Stange od. dgl. angeordnet werden.

Um nun ein unabsichtliches Aufbrechen der Soll-Bruchstelle 3 zu verhindern, ist die Nut für die Soll-Bruchstelle 3 nur bis knapp an den Randbereich 4 der Abdeckplatte 1 geführt.

Um in diesem Fall ein Aufbiegen der Abdeckplatte zu verhindern, kann die Bruchstelle nach der Montage über Verbindungsmittel, beispielsweise Laschen, überbrückt werden. Die Markierungen 5 in der Abdeckplatte 1 für die Befestigungsmittel der Lasche können im Zuge der Herstellung erfolgen.

Um nun ein sicheres Aufliegen der Abdeckplatte 1 am Boden, so auch an Böschungen die am Straßenrand vorgesehen sind, zu gewährleisten, ist eine Soll-Knickstelle 6 vorgesehen, die entsprechend einer Sehne, insbesondere einer Kreissehne, vorgesehen ist. Diese Soll-Knickstelle 6 ist als Nut ausgebildet.

Für den Einsatz von Schneestangen, die beispielsweise bei jedem zweiten Begrenzungspfahl oder bei prädestinierten Verkehrszeichen vorgesehen werden, kann eine weitere Ausnehmung 7 außermittig und im Abstand zur mittigen Ausnehmung 2 vorgesehen sein.

Der wirtschaftlich hervorstechenste Vorteil resultiert aber sicher aus der Materialauswahl für diese Abdeckplatte 1. Die Abdeckplatte 1 besteht aus an sich bekanntem recyceltem Kunststoff, wobei das Ausgangsgranulat eine Mischung aus Polyvinylchlorid und Polyethylen ist. Die Gewinnung der Ausgangsmaterialien, wie Polyvinylchlorid und/oder Polyethylen, erfolgt aus vorzugsweise industriellen Abfallprodukten, wie beispielsweise Alt-Kabeln. Die Mischung besteht aus 75 Vol. % bis 98 Vol. % Polyvinylchlorid und 25 Vol. % bis 2 Vol. % Polyethylen, insbesondere 80 Vol. % bis 90 Vol. % Polyvinylchlorid und 20 Vol. % bis 10 Vol. % Polyethylen.

Auch das Verfahren zur Herstellung der Abdeckplatte 1 ist äußerst rationell und damit wirtschaftlich. Die Abdeckplatte 1 wird vorzugsweise im Extrudier-Verfahren hergestellt.

Natürlich ist die Anwendung der Abdeckplatte 1 nicht nur auf den Straßenrand beschränkt. Sie kann beispielsweise auch auf Golfplätzen od. dgl. eingesetzt werden.

Abschließend sei der Ordnung halber darauf hingewiesen, dass in der Zeichnung einzelne Bauteile und Baugruppen zum besseren Verständnis der Erfindung unproportional und maßstäblich verzerrt dargestellt sind.

## Patentansprüche

1. Abdeckplatte zur Verhinderung von Pflanzenwuchs im Bereich rund um eine stangenähnliche Verkehrshilfseinrichtung, wie Leitpfosten, Pfahl, Mast, Straßenlaterne und/oder Haltestange von Verkehrszeichen, die vorzugsweise rund ausgebildet ist und mittig eine Ausnehmung für die Verkehrshilfseinrichtung aufweist, **dadurch gekennzeichnet, dass** in der Abdeckplatte (1) mindestens eine sich von der Ausnehmung (2) zum Rand erstreckende Soll-Bruchstelle (3) vorgesehen ist.

2. Abdeckplatte nach Anspruch 1, **dadurch gekennzeichnet, dass** die Soll-Bruchstelle (3) als Nut mit vorzugsweise dreieckförmigem Querschnitt in der Abdeckplatte (1) ausgebildet ist.

3. Abdeckplatte nach Anspruch 1 oder 2, **dadurch gekennzeichnet, dass** die Soll-Bruchstelle (3) nur bis knapp an den Randbereich (4) vorgesehen ist.

4. Abdeckplatte nach einem oder mehreren der Ansprüche 1 bis 3, **dadurch gekennzeichnet, dass** die Bruchstelle der Soll-Bruchstelle (3) nach der Montage über Verbindungsmittel, beispielsweise Laschen, überbrückt ist.

5. Abdeckplatte nach einem oder mehreren der Ansprüche 1 bis 4, **dadurch gekennzeichnet, dass** mindestens eine Soll-Knickstelle (6) vorgesehen ist, die entsprechend einer Sehne, insbesondere Kreissehne, angeordnet ist.

6. Abdeckplatte nach Anspruch 5, **dadurch gekennzeichnet, dass** die Soll-Knickstelle (6) als Nut ausgebildet ist.

7. Abdeckplatte nach einem oder mehreren der Ansprüche 1 bis 6, **dadurch gekennzeichnet, dass** eine weitere Ausnehmung (7), zur Aufnahme beispielsweise einer Schneestange, außermittig und im Abstand zur mittigen Ausnehmung (2) vorgesehen ist.

8. Abdeckplatte nach einem oder mehreren der Ansprüche 1 bis 7, **dadurch gekennzeichnet, dass** sie eine Plattenstärke von 0,5 bis 3 cm, insbesondere 0,8 bis 1,5 cm, aufweist.

9. Abdeckplatte nach einem oder mehreren der Ansprüche 1 bis 8, **dadurch gekennzeichnet, dass** sie ein Gewicht von 2 bis 5 kg, insbesondere von 3 bis 4 kg, aufweist.

10. Abdeckplatte nach einem oder mehreren der Ansprüche 1 bis 9, **dadurch gekennzeichnet, dass** sie einen Außendurchmesser von 35 bis 80 cm, insbesondere von 45 bis 55 cm, aufweist.

11. Abdeckplatte nach einem oder mehreren der Ansprüche 1 bis 10, **dadurch gekennzeichnet, dass** sie aus an sich bekanntem recyceltem Kunststoff besteht, wobei das Ausgangsgranulat eine Mischung aus Polyvinylchlorid und Polyethylen ist.

12. Abdeckplatte nach Anspruch 11, **dadurch gekennzeichnet, dass** die Mischung aus 75 Vol. % bis 98 Vol. % Polyvinylchlorid und 25 Vol. % bis 2 Vol. % Polyethylen, insbesondere 80 Vol. % bis 90 Vol. % Polyvinylchlorid und 20 Vol. % bis 10 Vol. % Polyethylen, besteht.

13. Abdeckplatte nach Anspruch 11 oder 12, **dadurch gekennzeichnet, dass** die Gewinnung der Ausgangsmaterialien, wie Polyvinylchlorid und/oder Polyethylen, aus vorzugsweise industriellen Abfallprodukten, wie beispielsweise Alt-Kabeln, erfolgt.

14. Abdeckplatte nach einem oder mehreren der Ansprüche 1 bis 13, **dadurch gekennzeichnet, dass** sie im Zuge eines Extrudier-Verfahrens hergestellt ist.
